# EUROPEAN PATENT APPLICATION

(11) **EP 1 802 099 A1**
(43) Date of publication of application: **27.06.2007**
(21) Application number: 05112728.0
(22) Date of filing: 22.12.2005
(51) Int. Cl.: H04N 3/26

(54) **Focus voltage modulation circuit and respective display apparatus**

(71) Applicant: DEUTSCHE THOMSON-BRANDT GMBH, 78048 Villingen-Schwenningen (DE)
(72) Inventor: Vogel, Stefan, 78086, Brigachtal (DE); Lopez, Daniel, 78052, VS-Obereschach (DE)
(74) Representative: Arnold, Klaus-Peter

(57) **Abstract**

The focus voltage modulation circuit comprises a horizontal focus voltage generator (HG) for providing a horizontal focus voltage (UH), a capacity (C1) for coupling the focus voltage (UH) to a static focus voltage (US), and a coupling circuit (CC) coupled to a beam current signal (IB) for modulating the static focus voltage (US) in response to the beam current signal (IB). In a preferred embodiment, the coupling circuit comprises a low-path filter for filtering off the line frequent signal part of the beam current signal and a pulse shaping circuit for adapting the output signal of the coupling circuit to a pulse shape in correspondence with the AC voltage part of the static focus voltage, which is varying in dependency of the beam current variation.

## Description

### FIELD OF THE INVENTION

The present invention relates to a focus voltage modulation circuit comprising a horizontal focus voltage generator for providing a horizontal focus voltage and a capacity for coupling the horizontal focus voltage to a static focus voltage. The focus voltage modulation circuit comprises usually also a vertical focus voltage generator for providing a vertical focus voltage. A circuit of this kind is used for example in display apparatuses comprising a flyback transformer and a cathode ray tube, in particular in respective television sets and computer monitors.

### BACKGROUND

A display apparatus which comprises a cathode ray tube (CRT) provides an image display on a screen of the CRT by accelerating and modulating an electron beam. The electron beam is deflected horizontally and vertically and intensity modulated in accordance with a video signal. For providing a picture with a high horizontal and vertical resolution, the electron beam landing spot on the screen should have a spot size comparable with the resolution of the respective shadow mask of the CRT. To reduce the divergence of the electron beam, it is therefore necessary to provide a focusing circuit generating horizontal and vertical focusing voltages and a respective focus electrode inside the CRT for a focusing of the electron beam.

The focus voltages depend on the distance between the electron source and the landing spot of the electron beam on the screen of the CRT, because the focusing of an electron beam works in a manner similar to an optical lens. It is therefore necessary to provide a DC voltage component as well as a horizontal and a vertical AC voltage component for a precise focusing of the electron beam. The DC voltage component is usually provided by the high voltage transformer via a voltage divider for example from the anode voltage or a high voltage winding. The AC voltage components depend on the geometry of the CRT and parabolic shaped voltages provide usually good results. A parabolic voltage for a vertical focusing can be generated by integrating a sawtooth voltage, and a parabolic voltage for a horizontal focusing can be derived for example by means of an S-shaping capacitor of a horizontal deflection stage for providing a dynamic focus voltage modulation, as described in US 6,300,731. For combining the AC focus voltages with the DC focus voltage a coupling capacitor is necessary.

For maintaining a small spot size of the electron beam during display of a picture, it is further important to keep the ratio between the anode voltage and the DC focus voltage constant under all beam current conditions. As known, especially in case of high beam currents, which may correspond for example to a white bar or white spots, the anode voltage and respectively the focus voltage are dropping considerably. A bad focusing of the electron beam therefore may become visible in areas of high beam current fields.

In WO 03/051038 a dynamic focus amplifier is described to which inputs a vertical and a horizontal parabola voltage are applied for providing a dynamic focus modulation for a cathode ray tube. The output voltage of the focus amplifier is coupled by means of a step-up autotransformer and a coupling capacitor to a DC focus voltage and to a respective focus electrode. The output of the focus amplifier can be gated on and off in response to a control signal, which can be an automatic kine bias (AKB) feedback during a measurement interval associated with sensing the cathode rate tube current in a feedback control arrangement

### SUMMARY OF THE INVENTION

The focus voltage modulation circuit according to the invention comprises a horizontal focus voltage generator providing a horizontal focus voltage and a capacity, for example a coupling capacitor, for coupling the horizontal focus voltage to a static focus voltage. The focus voltage modulation circuit comprises further a coupling circuit coupled with an input to a beam current signal for modulating the static focus voltage and therefore the focus voltage applied to the focus electrode of a cathode ray tube in addition in response to the beam current signal. The output signal of the coupling circuit may be coupled for example by means of an adding stage to the horizontal focus voltage, ahead of the capacity.

The inventors of the present invention have recognized, that the coupling capacitor together with the impedances of the horizontal and the vertical focus voltage generators and the impedance of a focus potentiometer providing the static focus voltage result in a filter that causes a variation of the ratio of the focus voltage to the high voltage being applied to the anode of a cathode ray tube, in dependence of the beam current. Thus, a bad focus may become visible in bright areas having a high beam current field. But by modulating the dynamic focus voltages by means of the coupling circuit, the voltage variation on both sides of the coupling capacitor is essentially the same and therefore a charge and a discharge of the coupling capacitor during display of a picture is reduced, reducing therefore the filter function of the coupling capacitor.

In a preferred embodiment, the coupling circuit comprises a low-path filter for filtering off the line frequent signal part of the beam current signal and a pulse shaping circuit for adapting the output signal of the coupling circuit to a pulse shape in correspondence with the AC voltage part of the static focus voltage, which is varying in dependency of the beam current variation. The coupling circuit in particular may comprise further an inverting transistor stage, which output is coupled together with the vertical focus voltage to an input of a vertical parabola amplifier, which is coupled with an output to the coupling capacitor.

In a further embodiment, the focus voltage modulation circuit comprises a vertical focus voltage generator having a vertical parabola amplifier, to which input a vertical focus voltage signal and an output signal of the coupling circuit is coupled. An output of the vertical parabola amplifier is coupled to the capacitance for providing a vertical focus voltage which is modulated by the beam current signal.

### BRIEF DESCRIPTION OF THE DRAWINGS

Preferred embodiments of the invention are explained now in more detail with regard to schematic drawings, which show:
Fig. 1 a focus voltage modulation circuit coupled with a flyback transformer and a cathode ray tube,
Fig. 2 a preferred embodiment of the focus voltage modulation circuit of figure 1, and
Figs. 3-6 measurement diagrams for explaining the operation of the focus voltage modulation circuits of figures 1 and 2.

### DETAILED DESCRIPTION OF PREFERRED EMBODIMENTS

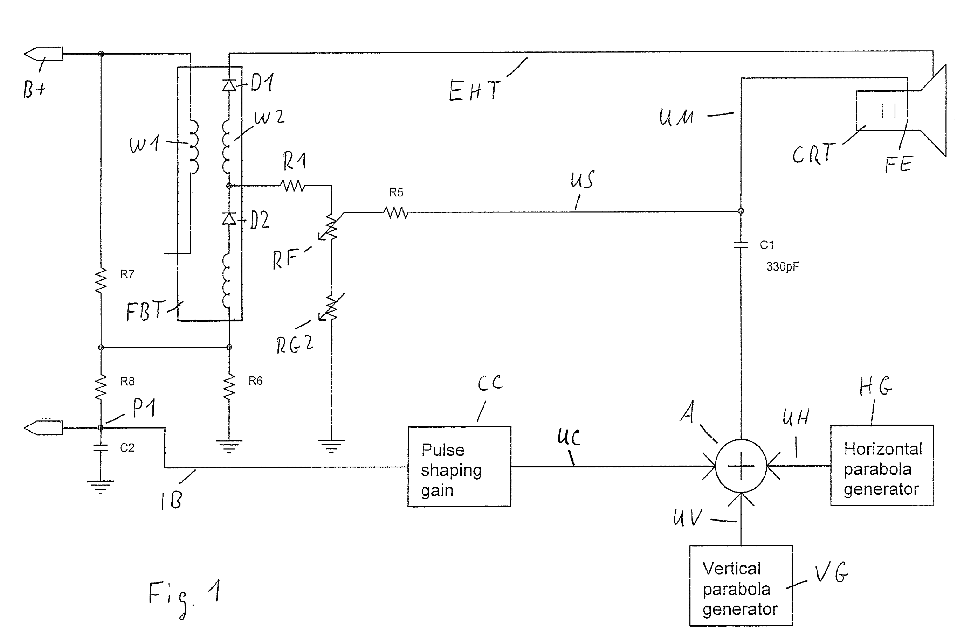

In figure 1 a flyback transformer FBT is shown as a simplified version comprising a primary winding W1 and a high voltage winding W2. The primary winding W1 is coupled with one end to a supply voltage B+ and with the other end to a switching transistor, not shown, for generating high voltage pulses in the high voltage winding W2. The high voltage pulses are rectified by high voltage diodes D1, D2 for providing a high voltage EHT for an anode of a cathode ray tube CRT. The flyback transformer FBT and the cathode ray tube CRT are a part of a display apparatus, for example of a computer monitor or a television set.

The high voltage winding W2 is used in addition for generating a so-called static focus voltage US being applied to a focus electrode FE of the cathode ray tube CRT and for generating a G2 voltage, being applied to a G2 electrode of the cathode ray tube CRT, not shown. Both voltages can be adjusted via respective potentiometers RF and RG2, which are coupled via a resistor R1 to a tap of the high voltage winding W2.

The current provided by the high voltage winding W2 to the anode of the cathode ray tube CRT is a measure for the electron beam current of the CRT and can be used therefore for regulating and in particular for limiting the beam current inside the CRT. A beam current signal IB is in this embodiment generated by a sensing resistor R6, which is coupled between the high voltage winding W2 and ground, and a voltage divider with resistors R7, R8 and a capacitor C2 being coupled between the supply voltage B+ and ground.

To the static focus voltage US and therefore to the focus electrode FE in addition a vertical focus voltage UV generated by a vertical focus voltage generator VG and a horizontal focus voltage UH generated by a horizontal focus voltage generator HG are coupled via an adding stage A and a capacitance C1, for example via a coupling capacitor. The capacitance C1 is necessary to block the focus voltage US, which is about a third of the anode voltage EHT, from the horizontal and the vertical parabola generators HG, VG, and has to be in particular a capacitor of a comparatively high capacitance, for example between 300 und 1000 Picofarads, for not filtering off the vertical focus voltage.

The vertical focus voltage UV has a frequency in accordance with the field frequency and the horizontal focus voltage UH a frequency in accordance with the line frequency of the picture display on the CRT, for providing a dynamic focus voltage modulation of the electron beam. The circuit as described so far is well known for a person skilled in the art and therefore described and shown in figure 1 only schematically.

The horizontal focus voltage generator HG and the vertical focus voltage generator VG are part of a focus voltage modulation circuit which comprises further according to the invention a coupling circuit CC coupled to the beam current signal IB for modulating the static focus voltage US in response to the beam current signal IB. The coupling circuit CC provides an output signal UC, which is coupled to the adding stage A.

The coupling circuit CC is arranged in particular such that in response to the beam current signal IB the voltage drop of the anode voltage EHT in relation to the voltage drop of the focus voltage present at the focus electrode FE is essentially proportional under any load conditions. In case of a high beam current, the coupling circuit CC therefore reduces the focus voltage in accordance with the drop of the anode voltage EHT, because the beam current signal IB is related to the voltage drop of the anode voltage EHT.

The voltages at both sides of the coupling capacitor C1 are therefore reduced correspondingly in relation to the beam current, and the filtering effect of capacitor C1 is therefore negligible or at least considerably reduced. The filtering effect of capacitor C1 could be reduced also by selecting a smaller capacity value for capacitor C1, but because capacitor C1 together with the impedance of the focus potentiometer RF results in a high-path filter and the vertical focus voltage is modulated in accordance with the field frequency of the video signal, the capacitance value of capacitor C1 has to be considerably high for not filtering off the vertical focus voltage.

The beam current signal IB may be provided for example via a tap P1 between resistor R8 and capacitor C2, which is in this embodiment a voltage, which is high in case of a high beam current and low in case of a low beam current. Because the voltage applied by the focus voltage modulation circuit at capacitor C1 has to be reduced by the coupling circuit CC when the beam current is high, an inverter stage inside the coupling circuit CC is necessary in this case. But a respective beam current signal may be derived for example also from the luminance signal as included in the video signal.

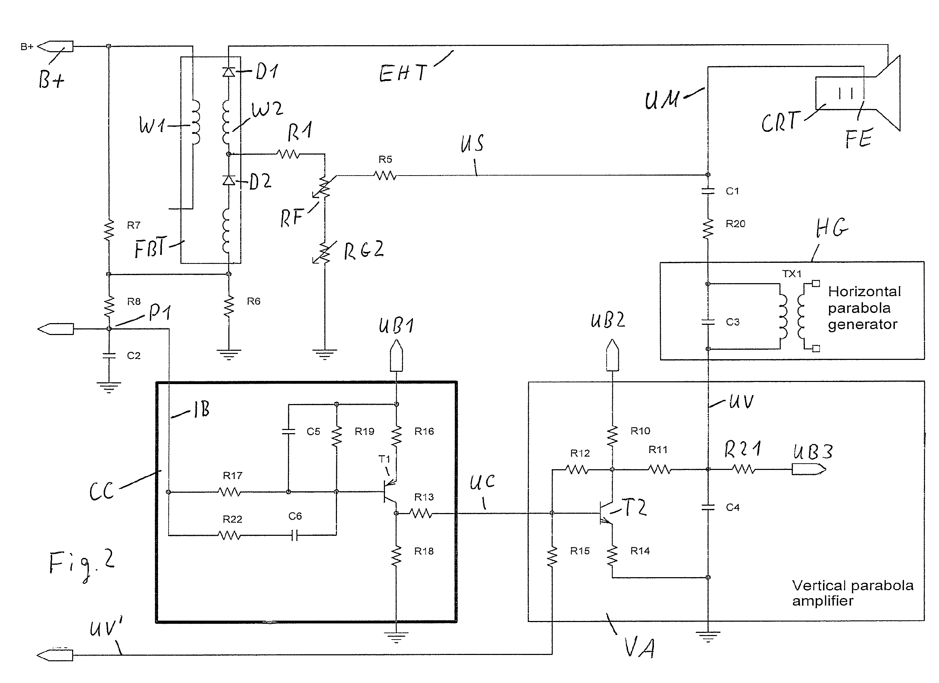

A preferred embodiment of the focus voltage modulation circuit of the invention is shown in Figure 2. The circuit part comprising the flyback transformer FBT, the cathode ray tube CRT with the high voltage winding W2 and the circuit for generating the static focus voltage US is described already with regard to Figure 1. The coupling circuit CC which is coupled with an input to the tap P1 providing the beam current signal IB generates an output voltage UC, which is coupled together with a vertical focus voltage signal UV' to an input of a vertical parabola amplifier VA. The vertical parabola amplifier VA comprises a transistor stage with a transistor T2 coupled to a second supply voltage UB2 and a third supply voltage UB3 and provides a vertical focus voltage UV, which is coupled via a resistor R20 to the coupling capacitor C1.

Between the resistor R20 and the vertical parabola amplifier VA a horizontal focus voltage generator HG is arranged for providing a dynamic horizontal focus voltage modulation. The horizontal focus voltage generator HG comprises a transformer TX1, via which a horizontal parabola provided by a horizontal parabola generator is added to the vertical focus voltage UV2 as provided by the vertical focus parabola amplifier VA.

The coupling circuit CC comprises a transistor stage with a transistor T1 generating an inverted output signal across a resistor R18. The transistor T1 is coupled to a first supply voltage UB1 and provides a voltage driven current source together with resistors R17, R19 and R16. Resistor R17 is coupled between tap P1 and the base of transistor T1. A filter, in this embodiment a low path filter comprising a capacitor C5 and the resistor R17, filters off the line frequent signal part of the beam current signal IB. The coupling circuit CC comprises further a pulse shaping circuit, in this embodiment a further high path filter comprising a resistor R22 and a capacitor C6 for adapting the output signal UC of the coupling circuit CC in correspondence with the pulse shape of the AC voltage part of the static focus voltage US. With resistor R22 and capacitor C6 in particular the gain for the AC part of the output signal UC can be varied.

A resistor R13 couples the voltage across resistor R18 to the input of the vertical parabola amplifier VA, which resistor R13 is selected such that the gain of the correction signal applied to the coupling capacitor C1 is adapted to the same signal amplitude as the AC voltage part of the static focus voltage US, as caused by the beam current variation. All components of the coupling circuit CC must be chosen such that the pulse shape of the voltage across resistor R18 is as equal as possible to the AC voltage part of the focus voltage US, when the coupling capacitor C1 is disconnected. This provides same voltage levels at both sides of the coupling capacitor C1 under any load conditions.

Because the vertical parabola amplifier VA is modulated in addition in response to the beam current signal IB via coupling circuit CC, a much higher supply voltage UB3 is necessary, for providing a correspondingly higher output voltage swing. For a vertical parabola amplifier VA not modulated by a coupling circuit CC, a supply voltage UB3 of 200 - 300 Volts is sufficient. With the coupling circuit CC connected, a supply voltage UB3 of 1300 Volts or even higher is necessary to enlarge the modulator range, depending on the worst case voltage drop on the static focus voltage US. The voltage drop depends in particular on the peak beam current and the design of the flyback transformer FBT.

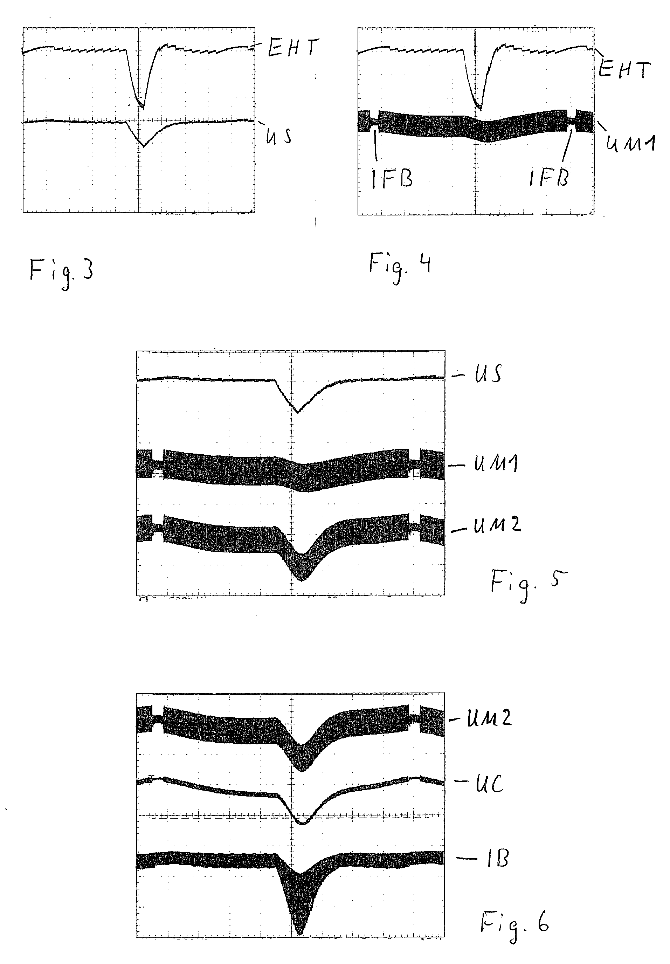

In figure 3 the operation of a display apparatus is shown, in which the dynamic focus voltage modulation circuit is disconnected. Shown is a high voltage EHT applied to the anode during a time interval of about a vertical field. Also shown is the static focus voltage US. The high voltage EHT shows a sharp drop in the middle of the display, because a video signal comprising a white bar, generated by a test signal generator, is applied to the video input of the display apparatus for a display on the cathode ray tube. The white bar causes a high beam current inside the CRT which leads to the drop of the high voltage EHT. Because the static focus voltage US is generated and derived from the flyback transformer FBT, the voltage US shows a similar drop. The time base per unit of the measurement is 2 ms.

In figure 4 the operation of the display apparatus is shown with the focus voltage modulation circuit connected, but with the coupling circuit CC disconnected. The high voltage EHT is not affected by the dynamic focus voltage modulation and shows the same signal shape as in figure 3, but the respective focus voltage UM1 shows a modulation with a higher frequency horizontal focus voltage, which cannot be resolved by the measurement display unit, and a lower frequency vertical parabola modulation in accordance with a field of the vertical frequency. As can be seen, the influence of the voltage drop of the high voltage EHT on the focus voltage UM1 is reduced in comparison with the focus voltage US of figure 3. Further, during vertical flyback the dynamic focus voltage modulation is suppressed in intervals IFB.

In figure 5 the focus voltage US of figure 3 and the modulated focus voltage UM1 of figure 4 are shown. In addition a dynamic focus voltage UM2 is shown, which is generated by the focus voltage modulation circuit, when the coupling circuit CC is connected and operating. As can be seen, due to the coupling circuit CC the envelope of the focus voltage UM2 corresponds essentially with the shape of the voltage US. Therefore, by means of the coupling circuit CC the influence of the filtering function of the coupling capacitor C1 is compensated.

In figure 6 the dynamic focus voltage UM2 is shown in comparison with the beam current signal IB, as provided by the flyback transformer FBT, and the output signal UC of the coupling circuit CC. As can be seen, the coupling circuit CC filters off the horizontal frequency part of the beam current signal IB, and the output voltage UC is shaped in response to the beam current signal IB. Further, the dynamic focus voltage UM2 comprises an envelope in accordance with the output signal UC.

A focus voltage modulation circuit of this kind is suitable in particular for a display apparatus comprising a flyback transformer and a cathode ray tube, as used for example within television sets and computer monitors. With a coupling circuit CC coupled to the beam current signal IB for modulating the focus voltage UM in response to the beam current signal IB, the filtering function of the coupling capacitor C1 can be compensated therefore in such a display apparatus.

But the present invention is not limited to the embodiments as described before with regard to the figures, and various available modifications come possible for those skilled in the art without departing from the scope of the invention. In particular, the beam current information may be derived also in an analog or a digital manner from the video signal and may be processed by a coupling circuit CC by means of a digital circuit, and a vertical focus voltage generator is not necessarily included in the focus voltage modulation circuit.

## Claims

1. Focus voltage modulation circuit comprising
a horizontal focus voltage generator (HG) for providing a horizontal focus voltage (UH), and
a capacity (C1) for coupling said focus voltage (UH,) to a static focus voltage (US),
**characterized in that**
the focus voltage modulation circuit comprises further a coupling circuit (CC) coupled to a beam current signal (IB) for modulating the static focus voltage (US) in response to the beam current signal (IB).

2. Focus voltage modulation circuit in accordance with claim 1, **wherein** the coupling circuit (CC) comprises a filter (R17, C5) for filtering off the line frequent signal part of the beam current signal (IB).

3. Focus voltage modulation circuit in accordance with claim 1 or 2, **wherein** the coupling circuit (CC) comprises a pulse shaping circuit (R22, C6) for adapting the output signal (UC) of the coupling circuit (CC) to a pulse shape in correspondence with the AC voltage part of the static focus voltage (US).

4. Focus voltage modulation circuit in accordance with claim 2 or 3, **wherein** the coupling circuit (CC) comprises a transistor stage (T1), to which input terminal the filter (R17, C5) and the pulse shaping circuit (R22, C6) are coupled.

5. Focus voltage modulation circuit in accordance with one of the preceding claims, **wherein** the beam current signal (IB) is provided by a high voltage winding (W2) of a flyback transformer (FBT).

6. Focus voltage modulation circuit in accordance with one of the preceding claims, **wherein** the coupling circuit (CC) comprises an inverter stage (T1).

7. Focus voltage modulation circuit in accordance with one of the preceding claims, **comprising** further an adding stage (A) for coupling the output signal (UC) of the coupling circuit (CC) to a terminal of the capacitance (C1).

8. Focus voltage modulation circuit in accordance with one of the preceding claims, **comprising** further a vertical focus voltage generator (VG) having a vertical parabola amplifier (VA), to which input a vertical focus voltage signal (UV') and an output signal (UC) of the coupling circuit (CC) is coupled, and an output of the vertical parabola amplifier (VA) being coupled to the capacitance (C1) for providing a vertical focus voltage (UV) in response to the beam current signal (IB).

9. Focus voltage modulation circuit in accordance with claim 8, **wherein** the vertical parabola amplifier (VA) operates with a supply voltage (UB3) being above 1000 Volts.

10. Display apparatus **comprising** a flyback transformer (FBT), a cathode ray tube (CRT) including a focus electrode (FE) and a focus voltage modulation circuit in accordance with one of the preceding claims.
